# EUROPEAN PATENT APPLICATION

(11) **EP 2 314 883 A1**
(43) Date of publication of application: **27.04.2011**
(21) Application number: 09173468.1
(22) Date of filing: 20.10.2009
(51) Int. Cl.: F04D 29/70, F02C 7/04, F02C 7/047, F02C 7/057

(54) **Device for feeding air to a compressor of a gas turbine**

(71) Applicant: Alstom Technology Ltd, 5400 Baden (CH)
(72) Inventor: Reyser, Karl, 79790, Küssaberg (DE)

(57) **Abstract**

The device (1) for feeding air to a compressor (3) of a gas turbine comprises a channel (5) housing a cooler (8), and a bypass (12) for diverting a part of the air passing through the channel (5) preventing it from passing through the cooler (8). The bypass (12) comprises at least a duct (13) having an inlet (14) upstream of the cooler (8) and an outlet (15) downstream of the cooler (8), and doors (16) for regulating the air access into the at least a duct (13).

## Description

### TECHNICAL FIELD

The present invention relates to a device for feeding air to a compressor of a gas turbine.

### BACKGROUND OF THE INVENTION

Gas turbines are known to comprise a compressor that feeds compressed air to a combustion chamber wherein a fuel is injected and a mixture is formed and combusted; the hot gases generated in the combustion chamber are then expanded in one or more turbines.

In order to optimize the power output and the performances, air is conditioned before it is supplied to the compressor, for example to reduce its temperature and increase its humidity.

In order to condition the air, US 2008/0,298,957 discloses an inlet air conditioning system having a channel with an inlet provided with a hood, a drift eliminator, a conditioning system and a silencer.

Upstream of the hood, this system has a cooler connected to the channel inlet via sliding doors that may assume a closed position, in which they define a prolongation of the channel walls to operatively connect the cooler to the channel, and an open condition, in which the walls overlap the cooler casing in order to define air passages at the two opposite sides of the channel, upstream of the channel inlet.

During operation, when air conditioning is needed (such as for example when the environment air is very hot and dry), the sliding doors are in a closed position, such that air may only enter the channel via the cooler; this lets the air be conditioned before being fed to the compressor.

In case no conditioning is needed or possible (for example because of the different season, weather conditions or water shortage), the sliding doors are moved to the open position, such that air may enter the channel passing through the passages at its sides, upstream of the channel inlet.

In this situation, no air or only a limited amount of air passes through the cooler, such that no water is wasted and the pressure drop is also reduced.

Nevertheless, since the cooler is located upstream of the channel inlet, the air passing through it during operation is not conditioned at all (for example the air passing through the cooler is not filtered).

This could cause particles or other elements to enter the cooler damaging it or reducing its performances.

In addition, a very large zone immediately outside of the channel inlet must be kept clear; in particular not only the zone in front of the cooler must be clear to allow air entrance into the channel, but also the zones at the two opposite sides of the channels where the passages are provided must be clear.

### SUMMARY OF THE INVENTION

The technical aim of the present invention is therefore to provide a device by which the cited problems of the known art are eliminated.

Within the scope of this technical aim, an aspect of the invention is to provide a device in which the air entering the cooler does not contain particles or other elements that could damage or reduce the cooler performances.

A further aspect of the invention is to provide a device that has limited costs.

Another aspect of the present invention is to provide a device that only requires a limited clear space outside of the channel inlet to guarantee a correct operation.

The technical aim, together with these and further aspects, are attained according to the invention by providing a device in accordance with the accompanying claims.

Advantageously, when the cooler is not used, it causes a pressure drop that is reduced when compared to the pressure drop caused by traditional devices without the bypass, and therefore the turbine power and efficiency are increased.

### BRIEF DESCRIPTION OF THE DRAWINGS

Further characteristics and advantages of the invention will be more apparent from the description of a preferred but non-exclusive embodiment of the device, illustrated by way of non-limiting example in the accompanying drawings, in which:
Figure 1 is a schematic view of a device for feeding air to a compressor of a gas turbine;
Figure 2 is a schematic view of a particular of a air feeding device, showing a bypass in a first embodiment of the invention; and
Figure 3 is a schematic view of a particular of an air feeding device, showing a bypass in a second embodiment of the invention.

### DETAILED DESCRIPTION OF THE INVENTION

With reference to the figures, these show a device 1 for feeding air 2 to a compressor 3 of a gas turbine.

The device 1 is known to generally comprise a channel 5 having an inlet provided with a hood 6; downstream of the hood the channel 5 houses a filter 7, a cooler 8 and a silencer 9.

The cooler is preferably an evaporative cooler.

Downstream of the silencer 9 the channel 5 is connected, typically via expansion joints 10, to a channel portion connected to the compressor 3.

The channel 5 is also provided with a bypass 12 for diverting at least a part of the air 2 passing through it, reducing or at least partially preventing the air 2 from passing through the cooler 8.

The bypass 12 comprises one or preferably more then one duct 13 (in a preferred embodiment the ducts are two in number) having an inlet 14 upstream of the cooler 8 and an outlet 15 downstream of the same cooler 8.

Moreover, the bypass is also provided with doors 16 for regulating the air access into the ducts 13.

The ducts 13 have a total cross section (i.e. the cross section of all the ducts 13) that allows less than 100% air to pass through them, with respect to the air passing through the channel 5.

In particular, the ducts total cross section allows between 50-70% air to pass through them.

The doors 16 are arranged to close the duct inlet 14 and are preferably sliding doors.

In addition, further doors 17 might be provided at the outlets 15 of the ducts 13, to prevent air passing through the cooler 8 from entering the ducts 13 via the outlets 15.

The channel 5 may also house, after the evaporative cooler 8, a drop catcher 18 for eliminating droplets from the air 2.

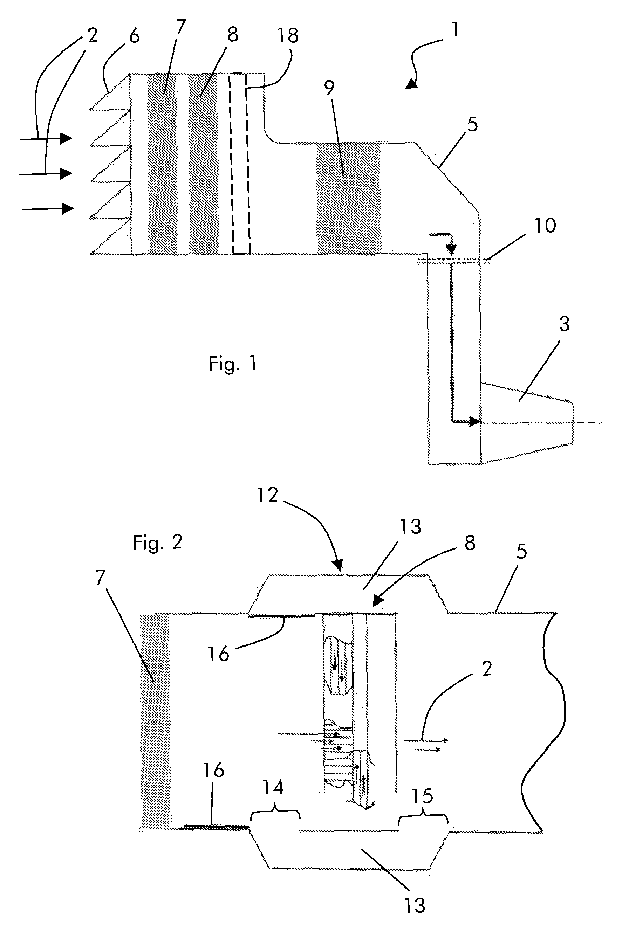

Figure 2 shows a first embodiment of a bypass 12.

In this embodiment a portion of the channel 5 is shown housing the evaporative cooler 8.

The ducts 13 are two in number and are provided one above and the other below the cooler 8; in addition the ducts 13 are provided with doors 16 for closing the duct inlets 14.

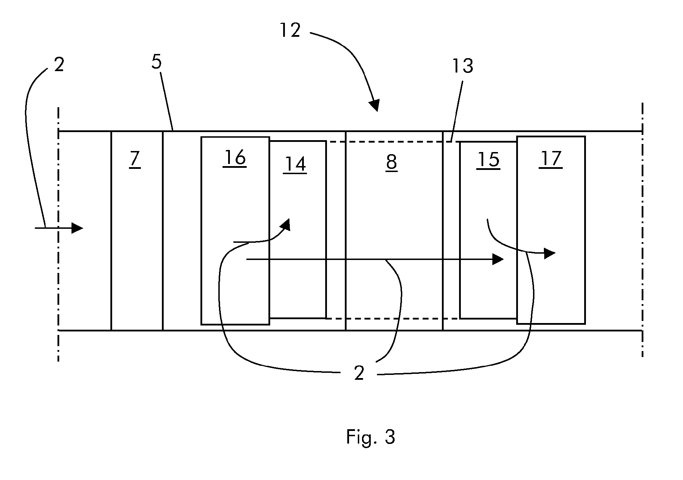

Figure 3 shows a further embodiment of a bypass 12.

Also in this embodiment the ducts 13 are two in number and are located at the two opposite sides of the channel 5 (left and right sides); in addition, doors 16 and 17 are provided for closing both the inlet 14 and the outlet 15 of the ducts 13.

The operation of the device is apparent from what described and illustrated and is substantially the following.

During operation with cooler activated the doors 16 are closed, such that air flowing in the channel 5 cannot enter the ducts 13 but must flow through the evaporative cooler 8; the doors 17 (when provided) are also closed to prevent air coming from the cooler 8 from entering the ducts 13 via the outlets 15.

During operation with cooler deactivated, doors 16 and (when provided) doors 17 are open, such that air passing through the channel 5 is diverted upstream of the cooler 8 into the ducts 13 and is then discharged downstream of the cooler 8.

The air flow rate diverted into the ducts 13 depends on the particular duct cross section.

Tests showed that reducing the air flow passing through the evaporator cooler 8 by diverting it via the bypass 12 lets the air pressure drop be sensibly reduced (and thus the gas turbine performances be increased) also with limited bypass sizes (in particular the duct cross section).

In particular, tests showed that when diverting 30% air into each of the two ducts (thus diverting 60% air), the drop pressure in the evaporative cooler 8 is reduced to a negligible value.

Moreover, since during both operation with air conditioning and without air conditioning the air entrance into the channel is achieved via the hood 6 and filter 7, a clear space only in front of the hood is required whereas the space at the sides of the channel 5 can be conveniently used. In addition, since the evaporative cooler 8 is downstream of the hood 6 and filter 7, air entering it is already at least partially conditioned.

Modifications and variants in addition to those already described are possible, for example the cooler may also be a chiller, a spray cooler or other kind of coolers or combinations thereof. In addition the hood and/or the channel (in a position upstream of the cooler) may house further air conditioning devices such as a drift eliminator and/or coalescer pads.

Naturally the features described may be independently provided from one another.

The device conceived in this manner is susceptible to numerous modifications and variants, all falling within the scope of the inventive concept; moreover all details can be replaced by technically equivalent elements.

In practice the materials used and the dimensions can be chosen at will according to requirements and to the state of the art.

### REFERENCE NUMBERS

- 1: device for feeding air to a compressor
- 2: air
- 3: compressor
- 5: channel
- 6: hood
- 7: filter
- 8: evaporative cooler
- 9: silencer
- 10: expansion joint
- 12: bypass
- 13: duct
- 14: duct inlet
- 15: duct outlet
- 16: door
- 17: door
- 18: drop catcher

## Claims

1. Device (1) for feeding air to a compressor (3) of a gas turbine comprising a channel (5) housing at least a cooler (8), and a bypass (12) for diverting at least a part of the air passing through the channel (5) preventing it from passing through the cooler (8), **characterised in that** said bypass (12) comprises at least a duct (13) having an inlet (14) upstream of the cooler (8) and an outlet (15) downstream of the cooler (8), and at least a door (16) for regulating the air access into the at least a duct (13).

2. Device (1) as claimed in claim 1, **characterised in that** said at least a duct (13) has a cross section that allows less than 100% air to pass through it, with respect to the air flow passing through the channel (5).

3. Device (1) as claimed in claim 2, **characterised in that** said at least a duct cross section allows between 50-70% air to pass through it.

4. Device (1) as claimed in claim 1, **characterised in that** the bypass (12) has only two ducts (13).

5. Device (1) as claimed in claim 4, **characterised in that** said ducts are one at each side of the cooler (8), or one above the cooler (8) and the other below the cooler (8).

6. Device (1) as claimed in claim 1, **characterised in that** said at least a door (16) for regulating the air access into the at least a duct (13) is arranged to close the duct inlet (14).

7. Device (1) as claimed in claim 6, **characterised in that** said at least a door (16) is a sliding door.

8. Device (1) as claimed in claim 1, **characterised by** comprising at least a further door (17) at the outlet (15) of the at least a duct (13), to prevent air passing through the cooler (8) from entering into the at least a duct (13).

9. Device (1) as claimed in claim 8, **characterised in that** said at least a further door (17) is a sliding door.

10. Device (1) as claimed in claim 1, **characterised in that** the cooler (8) is an evaporative cooler.

11. Device (1) as claimed in claim 1, **characterised in that** said channel (5) houses, upstream of the cooler (8), a filter (7).

12. Device (1) as claimed in claim 1, **characterised in that** said channel (5) houses, downstream of the cooler (8), a silencer (9).

13. Device (1) as claimed in claim 1, **characterised in that** said channel (5) is provided at its entrance with a hood (6).

14. Device (1) as claimed in claim 1, **characterised in that** said channel (5) houses, after the cooler (8), a drop catcher for eliminating droplets from the air (2).
